# EUROPÄISCHE PATENTSCHRIFT

(11) **EP 2 619 116 B1**
(45) Veröffentlichungstag und Bekanntmachung des Hinweises auf die Patenterteilung: **12.04.2017**
(21) Anmeldenummer: 12728970.0
(22) Anmeldetag: 31.05.2012
(51) Int. Cl.: B65G 39/12, B65G 51/03, B65G 13/071

(54) **ROLLENFÖRDERER MIT LAGERELEMENT MIT ACHSEN**
ROLLER CONVEYOR COMPRISING A BEARING ELEMENT WITH SHOULDERS
TRANSPORTEUR À ROULEAUX À ÉLÉMENT DE SUPPORT POURVU D'AXES

(30) Priorität: 14.06.2011 DE 102011104189
(43) Veröffentlichungstag der Anmeldung: 31.07.2013
(73) Patentinhaber: Interroll Holding AG, 6592 Sant' Antonino (CH)
(72) Erfinder: WOLTERS, Thomas, 41366 Schwalmtal (DE); DUDEK, Siegmund, 52525 Heinsberg (DE)
(74) Vertreter: Müller-Boré & Partner Patentanwälte PartG mbB
(86) Internationale Anmeldenummer: PCT/EP2012/002315
(87) Internationale Veröffentlichungsnummer: WO 2012/171614

(56) Entgegenhaltungen:
- EP-A1- 0 931 737
- WO-A1-00/01598
- FR-A1- 2 555 557
- FR-A1- 2 931 809
- GB-A- 1 168 280
- US-A- 6 161 681
- US-A1- 2002 050 444
- US-A1- 2004 099 511
- US-A1- 2007 248 294
- US-A1- 2009 161 999
- US-B1- 6 189 672

## Beschreibung

Die vorliegende Erfindung betrifft eine neue Konstruktion von angetriebenen Rollenbahnen und deren Komponenten.

### Hintergrund der Erfindung und Stand der Technik

Rollenbahnen sind dank vieler Varianten die ideale Transportmöglichkeit für unterschiedliche Güter.

Rollenförderer werden unter anderem auch eingesetzt, um Bandförderer auf gerader Strecke oder in Kurven miteinander zu verbinden. Hier werden oft Puffer benötigt, die unterschiedliche Taktzyklen von Maschinen kompensieren können. Dabei werden z.T. Stauförderer eingesetzt, mit denen eine Staufunktion erreicht werden kann, die insbesondere bei der Maschinenverkettung sinnvoll ist.

Rollenbahnen können unter anderem als Leicht-Rollenbahnen oder als Standardrollenförderer eingesetzt werden.

Leicht-Rollenbahnen, die auch als Kleinstrollenförderer bezeichnet werden, dienen dem Transport von kleinen, leichten Fördergütern, insbesondere über kurze Strecken. Im Allgemeinen werden mit Leicht-Rollenbahnen Stückgüter von maximal 15 kg je Meter bei einer Fördergeschwindigkeit von ca. 1 m/s transportiert. Ein Leichtrollenförderer mit 2 Meter Länge kann beispielsweise aus 57 Rollen mit einem Durchmesser von je 30 mm (30er Rolle) und einer Rollenteilung von 35 mm bestehen, so dass auch kleine Transportgüter sicher transportiert werden können und nicht in der Rollenbahn verhaken.

Standardrollenförderer führen Rollen mit 50 mm Durchmesser (50er Rolle) und einer Rollenteilung von ca. 75 mm und mehr. Die Rollen sind je aus Kunststoff oder Metall. Rollenförderer sind stationäre Anlagen in der Fördertechnik, die Stückgut über eine Anordnung von Rollen bewegen.

Für angetriebene Rollenbahnen existieren unterschiedliche Antriebskonzepte.

Bei Geradförderern werden z.B. Ketten bei höheren Antriebsmomenten und niedrigen Geschwindigkeiten verwendet, wohingegen bei mittleren Momenten Keilrippenriemen und bei niedrigen Momenten Rundriemen eingesetzt werden. Zum Teil kommen auch Flachriemen zum Einsatz. Die Anordnung des Riemens kann dabei tangential zu den angetriebenen Rollen oder umschlingend zu den angetriebenen Rollen sein. Im letzteren Fall kann z.B. ein Antrieb von Rolle auf Rolle oder ein Antrieb durch eine Königswelle erfolgen.

Bei tangentialem Antrieb berührt der Riemen die Rollen tangential. Dabei wird der Riemen entweder mit Stützrollen oder mittels Gleitschiene gestützt, so dass es zur erforderlichen Normalkraft zwischen Förderrolle und dem Riemen kommt. Je nach verwendetem Riemen und zu übertragendem Moment, ist eine mehr oder weniger große Vorspannung des Riemens erforderlich.

Insbesondere im Fall des Tangentialantriebs müssen die Riemen entweder vor Ort auf die benötigte Länge gekürzt und zusammengeschweißt werden oder es müssen zusätzliche Umlenkrollen und aufwändige Spannvorrichtungen eingesetzt werden, wenn vorgefertigte Antriebsriemen mit einer vorgegebenen Länge verwendet werden sollen. Dabei ist zu berücksichtigen, dass nur wenige Zugmittel überhaupt auf die gewünschte Länge kürzbar sind und dass die Qualität der Schweißung vor Ort nur schwer sichergestellt werden kann.

Für eine gezielte Wirkung muss das Transmissionselement stets stark gespannt sein und regelmäßig nachgespannt werden. Eine zu geringe Spannung kann zu starken Trumschwingungen oder zum Überspringen der Zähne an den Zahnscheiben führen.

Zu hohe Kräfte verursachen eine starke Belastung der Lager und des Riemens und beeinflussen die Getriebekomponenten durch Verschleißerscheinungen negativ. Außerdem führen hohe Kräfte, eine hohe Steifigkeit der Riemen, eine Vielzahl von Riemenumlenkungen und/oder der Einsatz von Gleitschienen zu starker Verlustreibung, zu Verschleiß und zu unnützem Energieverlust.

Bei dem Antrieb von Rolle auf Rolle treibt eine Rolle, die mit einem Antriebsmotor verbunden ist, mittels Transmissionselement zumeist kraftschlüssig die darauffolgende Rolle an. Ein weiteres Transmissionselement kann die nächste darauffolgende Rolle antreiben, etc. Dabei umschlingen die Transmissionselemente jeweils die halbe Rolle.

Bei einer großen Anzahl von Rollen sind viele Transmissionselemente erforderlich, so dass Reibung und somit Energieverbrauch und Verschleiß zunehmen. Bei einem 2m langen Rollenförderer mit 30mm Rollen sind ca. 60 Riemen erforderlich. Hier macht sich auch der Drehzahlverlust negativ bemerkbar, da aufgrund des Schlupfes bei jeder Übertragung von Riemen auf Rolle die letzte Rolle eine deutlich unterschiedliche Rotationsgeschwindigkeit aufweisen kann als die erste angetriebene Rolle. Um diese Nachteile zu vermeiden werden zum Teil motorisierte Rollen eingesetzt. Diese motorisierte Rollen werden über die Rollbahnstrecke integriert, so dass eine motorisierte Rolle über Rundriemen zusammenhängend z.B. jeweils vier Rollen vor und nach der motorisierten Rolle antreiben.

Bei einem Antrieb durch eine Königswelle sind ebenfalls viele Umschlingungen des Transmissionselements erforderlich, was zu entsprechenden Reibungsverlusten führt. Außerdem ist die Montage des Transmissionselements aufwändig.

Bei angetriebenen Rollenbahnen, insbesondere bei den Leicht-Rollenbahnen, bei denen alle oder zumindest ein Großteil der Rollen angetrieben sein sollen, stellt sich daher das Problem, dass eine Vielzahl von angetriebenen Rollen, mit eigener Antriebseinheit, nur aufwändig und teuer zu verwirklichen sind. Angetriebene Rollenbahnen, bei denen eine Vielzahl von Rollen über eine Antriebseinheit angetrieben werden, bedürfen einer verhältnismäßig starken Antriebseinheit, weil die Kraftübertragung von der Antriebseinheit reibungsbehaftet und daher mit einem hohen Energieverbrauch verbunden ist. Zudem führt ein reibungsbehafteter Betrieb häufig zu Verschleiß und vorzeitigem Ausfall von Komponenten der Rollenbahnen. Die genannten Probleme treten sowohl bei Geradförderern als auch bei Kurvenförderern auf, wobei sich Kurvenförderer eher als noch problematischer erweisen, weil ein Antrieb entlang einer Kurve eine entsprechende Umlenkung des Transmissionselements oder der Transmissionselemente bedarf, was zu mehr Reibungsverlusten und Verschleiß führen kann.

Die Druckschrift EP 0 931 737 A1 offenbart ein einstückig als Spritzgussteil hergestelltes Förderstreckenlagerelement zur Anbringung an einen Förderrahmen eines Förderers, wobei das Förderstreckenlagerelement Lagerstellen zur Lagerung von Führungsrollen an dem Förderrahmen aufweist.

Die Druckschrift GB 1 168 280 A offenbart eine Rollenbahn mit durch eine Kette angetriebenen Wellen. Die Wellen sind für die horizontale Winkelbewegung an Trägern befestigt, wobei jede Welle durch Lager unterstützt wird, die Träger in Längsrichtung durch einen Hydraulikzylinder beweglich sind.

### Aufgabe

Es ist daher Aufgabe der Erfindung, einen einfach zu montierenden Rollenförderer und dessen Komponenten bereitzustellen, die einfach zu montieren, vielseitig einsetzbar und zuverlässig sind und im Betrieb wenig Energie verbrauchen.

### Lösung der Aufgabe

Die Aufgabe wird durch die Gegenstände der unabhängigen Ansprüche gelöst.

Ein erster Aspekt zur Lösung der Aufgabe betrifft ein Förderstreckenlagerelement nach Anspruch 1.

Bei einer Ausführungsform des vorstehend beschriebenen Förderstreckenlagerelements kann die Lagerstelle zur Ermöglichung einer schwimmenden Lagerung als längliche Ausnehmung ausgebildet sein.

Die Lagerstelle kann zwei parallele Lagerstellenbegrenzungsflächen aufweisen. Der Abstand der Lagerstellenbegrenzungsflächen kann mit dem Durchmesser eines Achsendes einer am Förderstreckenlagerelement zu lagernden Förderrolle entsprechen. So kann die Position der Förderrolle quer zur Förderrichtung definiert festgelegt werden und zugleich ein schwimmende Lagerung senkrecht zur Förderebene ermöglicht werden, wobei das Achsende der Förderrolle in der Lagerstelle einen Bewegungsfreiraum senkrecht zur Förderebene aufweist. Die Lagerstelle kann demnach als Langloch ausgebildet sein. Das Langloch kann als Durchgangsloch oder als Sackloch ausgebildet sein. Die Lagerstellen können eine konkave Lagergrundfläche aufweisen.

Bei einer weiteren Ausführungsform des vorstehend beschriebenen Förderstreckenlagerelements kann die Lagerstelle eine längliche Form aufweisen und nach oben geschlossen sein.

Erfindungsgemäß ist die Rollenachse als Tragrollenachse ausgebildet und erstreckt sich in einer Richtung, dass sich die Rotationsachse einer an der Tragrollenachse anzuordnenden Tragrolle im Wesentlichen parallel zu einer Rotationsachse einer in der Lagerstelle zu lagernden Förderrolle erstreckt.

Die anzubringende Tragrolle kann demnach eine im Wesentlichen waagrechte Rotationsachse aufweisen. Da z.B. in Kurvenförderern in der Regel konische Rollen verwendet werden, kann die Rotationsachse der Förderrolle leicht gegenüber der Förderebene gekippt sein. Im Wesentlichen waagrecht umfasst daher auch die Lagerung der Tragrollen, bei der die Rotationsachse der Tragrollen parallel zu einer Tangentialebene verläuft welche die Rollenoberfläche von oben oder von unten tangiert, oder eine Lagerung der Tragrollen, bei der die Rotationsachse der Tragrollen in diesem Bereich liegt.

Erfindungsgemäß weist das Förderstreckenlagerelement eine zweite Rollenachse auf, die als Stützrollenachse ausgebildet ist und die sich in einer Richtung erstreckt, dass sich die Rotationsachse einer an der Stützrollenachse anzuordnenden Stützrolle im Wesentlichen senkrecht zu einer Förderebene erstreckt.

Die Förderebene in dem Zusammenhang ist die Tangentialebene, welche die Oberseite der Förderrollen berührt. Im Wesentlichen senkrecht umfasst in dem Zusammenhang auch eine leicht nach außen gekippte Position der Stützrollenachse. Wie bereits beschrieben, können in Kurvenförderern auch konische Förderrollen verwendet werden, so dass die Rotationsachse der Stützrolle leicht gegenüber der Förderebene gekippt sein kann. Die Stützrollenachse kann daher derart angeordnet sein, dass die Rotationsachse der zu lagernden Stützrollen senkrecht zu der Rotationsachse der Tragrollen oder senkrecht zu einer der Tangentialebenen verläuft, welche die Rollen von oben oder von unten tangieren. Die Lagerung der Tragrollen kann derart erfolgen, dass die Rotationsachse der jeweiligen Tragrollen im Bereich zwischen der oberen und der unteren Tangentialebene liegt.

Erfindungsgemäß ist das Förderstreckenlagerelement einschließlich der zumindest einen Lagerstelle, der zumindest einen Stützrollenachse und der
zumindest einen Tragrollenachse einstückig als Spritzgussteil hergestellt.

Ein zweiter Aspekt zur Lösung der Aufgabe betrifft ein Nachrüstset für einen Rollenförderer umfassend eine Mehrzahl von Förderstreckenlagerelementen nach einer der Ausführungsformen gemäß dem ersten Aspekt, sowie Befestigungselemente zur Befestigung der Förderstreckenlagerelemente an einem Förderrahmen, eine Mehrzahl von Förderrollen, und ein Antriebssystem umfassend zumindest einen Antriebsriemen, eine Mehrzahl von Tragrollen, zumindest eine Umlenkrolle, und zumindest eine Antriebsrolle, die mit einem Antriebsmotor, z.B. einem Elektromotor, verbunden ist.

Ein dritter Aspekt zur Lösung der Aufgabe betrifft einen Rollenförderer mit einem Förderrahmen und einer Mehrzahl von Förderrollen, die in dem Förderrahmen drehbar gelagert sind, und einer Mehrzahl von Förderstreckenlagerelementen nach einer der Ausführungsformen gemäß dem ersten Aspekt, wobei mehrere Förderstreckenlagerelemente durch zumindest ein Befestigungselement an einem Seitenprofil des Förderrahmens befestigt sind, wobei der Rollenförderer ferner ein Antriebssystem mit zumindest einen Antriebsriemen umfasst, der zwischen zwei Umlenkrollen gespannt ist und dessen Obertrum zwischen den Umlenkrollen über eine Mehrzahl von Tragrollen gestützt wird, sowie eine Mehrzahl von Förderrollen, die schwimmend auf dem Obertrum des Antriebsriemens gelagert sind.

Der Rollenförderer kann ein Kurvenrollenförderer sein. Der Antriebsriemen kann einen runden Querschnitt, insbesondere einen kreisrunden Querschnitt aufweisen. Ein Antriebsriemen mit einem runden Querschnitt kann auch als Rundriemen bezeichnet werden. Der Antriebsriemen kann als PU-Rundriemen ausgebildet sein, unter Verwendung des Materials Polyurethan hergestellt sein. Der Begriff "schwimmend gelagert" bedeutet, dass die Förderrolle auf dem Antriebsriemen so aufliegt, dass der Antriebsriemen die Förderrolle lediglich tangential von unten her berührt.

Bei einer Ausführungsform eines derartigen Rollenförderers kann das zumindest eine Befestigungselement, mit dem mehrere Förderstreckenlagerelemente an dem Seitenprofil des Förderrahmens befestigt sind, als konsolenartiges Blechbiegeteil ausgeführt sein, insbesondere als länglicher Blechstreifen, der in Querrichtung des Blechstreifens nebeneinander verlaufend einen Befestigungsbereich und einen Auflagebereich aufweist, wobei der Auflagebereich im Verhältnis zum Klemmbereich in etwa rechtwinklig abgekantet ist.

Bei einer weiteren Ausführungsform eines der vorstehend beschriebenen Rollenförderer kann der Rollenförderer als Kurvenrollenförderer ausgebildet sein, wobei der Antriebsgurt auf der den Förderrollen abgewandten Seite auf einer Vielzahl von Tragrollen verläuft und kurveninnenseitig durch eine Vielzahl von Stützrollen abgestützt wird, so dass der Antriebsgurt entlang einer der Förderkurve folgenden Polygonkurve verläuft.

Der Begriff Kurvenrollenförderer bezeichnet einen Rollenförderer, der Fördergüter entlang einer Kurve, insbesondere entlang eines Kreissegments, fördert. Der Förderrahmen des Kurvenrollenförderers kann ein kreisförmig gebogenes Innenprofil aufweisen, an dem die Förderrollen kurveninnenseitig gelagert sind, wobei die Drehachsen der Förderrollen mit den Radiusvektoren zusammenfallen, die vom Kreismittelpunkt des dem kreisförmig gebogenen Innenprofil zugehörigen Kreises ausgehen. Der Förderrahmen des Kurvenrollenförderers kann ferner ein kreisförmig gebogenes Außenprofil aufweisen, an dem die Förderrollen kurvenaußenseitig gelagert sind. Innenprofil und Außenprofil können den gleichen Kreismittelpunkt aufweisen. Das Kreissegment kann z.B. ein 30° - Segment, ein 45° - Segment, ein 60° Segment oder ein 90° - Segment sein. Auch andere Winkelbereiche eines Kurvenrollenförderers sind denkbar. Der Bereich des Antriebsriemens auf dem die Förderrollen aufliegen kann als Obertrum oder als Lasttrum bezeichnet werden. Die den Förderrollen abgewandte Seite des Antriebsriemens bezeichnet die untere Seite des Obertrums des Antriebsriemens.

Die Tragrollen des Rollenförderers können an dem Förderstreckenlagerelement derart gelagert sein, dass ihre Rotationsachsen jeweils parallel zu einer Ebene verlaufen, welche die Rollenoberflächen der Förderrollen auf der Förderseite tangiert. Bei anderen Ausführungsformen können die Kurvenaußenseiten der Tragrollen etwas nach unten geneigt sein.

Die Auflagekonsole eines beschriebenen Kurvenrollenförderers kann, wie vorstehend beschrieben, aus einem abgekanteten, länglichen Blechstreifen gebildet werden, der entlang einer Kreislinie gebogen verläuft, die dem kreisförmig gebogenen Innenprofil entspricht, so dass die Auflagekonsole leicht an dem Innenprofil befestigt werden kann.

Bei noch einer weiteren Ausführungsform eines der vorstehend beschriebenen Rollenförderer kann das Verhältnis zwischen der Anzahl der angetriebenen Förderrollen F und der Anzahl der Stützrollen S der Beziehung 0,5 ≤ F/S ≤ 4 entsprechen.

Je kleiner das Verhältnis gewählt ist, desto feiner ist die Polygonkurve, entlang welcher der Antriebsriemen verläuft, abgestuft. Dies gewährleistet, dass sich der Antriebsriemenverlauf im Bereich des Berührpunktes mit der Oberfläche der Förderrolle näher an den idealen, reibungsärmsten und somit verschleißärmsten Antriebsriemenverlauf annähert. Der reibungsärmste Antriebsriemenverlauf entspricht im Berührpunkt einer mathematischen Tangente an der Oberfläche der Förderrollenoberfläche. Da die Förderrollenoberfläche einer Förderrolle eines Kurvenförderers in der Regel als Konus ausgebildet ist, würde eine solche mathematische Tangente in einer Ebene verlaufen, die senkrecht auf die Rotationsachse des Konus steht und dabei den kreisförmigen Querschnitt des Konus berührt. Ein solcher idealer Verlauf kann z.B. erreicht werden, wenn jeweils eine Stützrolle auf einer Kreislinie mit dem Mittelpunkt des Krümmungskreises der Förderkurve und mittig zwischen zwei Förderrollen und/oder mittig zwischen zwei Tragrollen angeordnet ist. Wenn eine Stützrolle nicht mittig zwischen den Tragrollen angeordnet ist, wird dieses ideale Verhältnis in Bezug auf die Tragrollen nicht ganz erreicht. Jedoch hat sich in diesem Fall gezeigt, dass bei einer solchen Ausführungsform der runde Antriebsriemen stabiler in seiner Position verläuft und weniger dazu neigt aus seiner geführten Position auszubrechen, so dass ein störungsärmerer Betrieb gewährleistet werden kann. In Versuchen hat sich ferner gezeigt, dass ein Verhältnis von F/S = 2 eine ausreichend fein abgestufte Polygonkurve ergibt.

Bei einer Ausführungsform eines solchen Kurvenrollenförderers ist demnach an jedem zweiten Förderstreckenlagerelement eine Stützrolle und eine Tragrolle befestigt. Die jeweils benachbarten Förderstreckenlagerelemente sind identisch ausgebildet und können daher ebenfalls eine Tragrollenachse und eine Stützrollenachse aufweisen. Diese Rollenachsen sind aber bei dieser Ausführungsform nicht mit Tragrollen oder Stützrollen versehen.

Gemäß einer weiteren Ausführungsform eines der vorstehend beschriebenen Rollenförderer können die Förderstreckenlagerelemente jeweils eine Tragrollenachse und eine Stützrollenachse aufweisen, wobei sowohl die Tragrollenachse als auch die Stützrollenachse eines Förderstreckenlagerelements entlang des Verlaufs des Antriebsriemens von der Position der Lagerstelle des Förderstreckenlagerelements ausgehend versetzt angeordnet sind.

Bei einem Rollenförderer gemäß noch einer weiteren Ausführungsform eines der vorstehend beschriebenen Rollenförderer kann sowohl die Tragrollenachse als auch die Stützrollenachse der jeweiligen Förderstreckenlagerelemente entlang des Verlaufs des Antriebsriemens von der Position der Lagerstelle des Förderstreckenlagerelements ausgehend um in etwa einen halben Förderrollendurchmesser versetzt angeordnet sein. Ein halber Förderrollendurchmesser bezieht sich auf den Förderrollendurchmesser der Förderrolle im kurveninnenseitigen Bereich der Förderrolle. Durch diese Gestaltung kann gewährleistet werden, dass die Tragrollen und die Stützrollen jeweils mittig zwischen zwei Rollen angeordnet sind. Die Tragrollen und die Stützrollen können dabei von der Position der Lagerstelle des Förderstreckenlagerelements ausgehend jeweils in die gleiche Richtung versetzt angeordnet sein, so dass die Tragrollen und die Stützrollen übereinander liegen und den Antriebsriemen entlang seines Verlaufs jeweils an der gleichen Stelle berühren.

Dabei können die Rotationsachsen der Stützrollen jeweils einen senkrechten oder in Richtung der Kurvenaußenseite geneigten Verlauf aufweisen. Ein senkrechter Verlauf der Rotationsachsen der Stützrollen bedeutet, dass die Rotationsachsen der Stützrollen parallel zueinander verlaufen. Bei zylindrischen Rollen führt dies dazu, dass aus der Andruckkraft des Antriebsriemens auf der Stützrolle keine Kraftkomponenten resultieren, die in Richtung der Rotationsachse der Stützrolle gerichtet sind. So wird ein Abrutschen des Antriebsriemens verhindert. In diesem Fall wird der Rundriemen lediglich über das Gewicht der Förderrollen niedergehalten werden, die auf ihm aufliegen. Eine in Richtung der Kurvenaußenseite geneigter Verlauf bezeichnet einen Verlauf bei dem das förderrollenseitige Ende der Rotationsachse in Richtung der Außenseite der Förderkurve geneigt ist. Bei einer zylindrischen Stützrolle wird so eine Kraftkomponente der Andruckkraft zwischen Antriebsriemen und Stützrolle erzeugt, die den Antriebsriemen nach unten auf die Tragrollen drückt, so dass auch bei dieser Ausführungsform ein Abrutschen des Antriebsriemens verhindert wird. Da der Antriebsriemen die Stützrollen nicht lediglich tangiert sondern um einen, wenn auch geringen Winkel umschlingt, führt eine Neigung der Stützrollen dazu, dass zwischen Antriebsriemen und Stützrolle eine geringfügige Relativbewegung und somit Reibung und Verschleiß auftritt. Je geringer die Neigung der Rotationsachse der Stützrolle ist, desto geringer ist die auftretende Relativbewegung. Eine Neigung zwischen 0° und 5°, insbesondere eine Neigung zwischen 0° und 2°, hat sich mit Blick auf Reibung und Verschleiß als unproblematisch erwiesen. Alternativ oder zusätzlich zu der entsprechenden Neigung der Rollenachsen der Tragrollen oder der Stützrollen können die Oberflächen der Tragrollen und/oder der Stützrollen kegelförmig gestaltet sein, sodass ein Abrutschen des Gurts verhindert wird.

Bei einer weiteren Ausführungsform eines der vorstehend beschriebenen Rollenförderer können die Föderstreckenlagerelemente jeweils eine mit dem Befestigungselement korrespondierende Konsolenanlagefläche und eine mit dem Seitenprofil korrespondierende Seitenprofilanlagefläche aufweisen.

An der Konsolenanlagefläche können ein oder mehr Befestigungslöcher vorgesehen sein. So können die Föderstreckenlagerelemente z.B. mit dem Befestigungselement verschraubt werden. Ferner kann an der Konsolenanlagefläche ein Positionsvorsprung oder eine Mehrzahl von Positionsvorsprüngen angeordnet sein. Ein Positionsvorsprung kann in eine korrespondierende Positionsausnehmung am Befestigungselements eingreifen und so eine definierte Position des jeweiligen Förderstreckenlagerelements im Verhältnis zum Befestigungselement sicherstellen. Die Seitenprofilanlagefläche kann konkav ausgebildet sein, wobei der Verlauf einer solchen konkaven Seitenprofilanlagefläche dem Oberflächenverlauf des Seitenprofils entspricht. Über eine solche Seitenprofilanlagefläche kann, gegebenenfalls im Zusammenwirken mit einem Positionsvorsprung, ebenfalls eine definierte Position des jeweiligen Förderstreckenlagerelements im Verhältnis zum Befestigungselement sichergestellt werden.

Bei noch einer weiteren Ausführungsform eines der vorstehend beschriebenen Rollenförderer können die Stützrollen und/oder die Tragrollen als Rollen mit kreiszylindrischen oder kreiskegelförmigen Oberflächen ausgeführt sein.

Diese Oberflächengeometrie bewirkt, dass die Berührung zwischen dem Antriebsriemen und den Tragrollen und Stützrollen in einer Richtung quer zum Verlauf des Antriebsriemens jeweils nur an einem Punkt der jeweiligen Rollenoberfläche erfolgt, wenn man eine Verformung des Antriebsriemens oder der Rollen aufgrund der Flächenpressung vernachlässigt. Da so mehrere Berührungspunkte des Antriebsriemens mit einer der Rollen vermieden werden, können auch Berührungspunkte mit unterschiedlichen Relativgeschwindigkeiten vermieden werden. Auf diese Art und Weise kann Reibung und Verschleiß von Rollen und Antriebsriemen verringert werden. Die Stützrollen und/oder die Tragrollen können ferner als bordlose Rollen ausgeführt sein. Ein Bord ist ein Vorsprung an der Stirnseite einer Rolle, der ein Abrutschen des Antriebsriemens von der Rolle verhindern soll. Auch bei einer Berührung des Antriebsriemens am Bord einer Rolle kann es zu einer unterschiedlichen Relativgeschwindigkeit und somit zu Reibung und Verschleiß kommen. Diese Nachteile können bei einer auf der Kurveninnenseite bordlosen Tragrolle vermieden werden. Zudem weisen Tragrollen, die auf der Kurvenaußenseite der jeweiligen Tragrolle kein Bord aufweisen, den Vorteil einer besonders einfachen Montage des Antriebsriemens auf, der bei der Montage nicht durch den engen Spalt zwischen Tragrollenbord und Förderrollen gezwungen werden muss.

Bei weiteren Ausführungsformen des beschriebenen Rollenförderers kann der Kurvenrollenförderer ferner zumindest eine Umlenkrolle mit konkaver Auflagefläche aufweisen. Eine Umlenkrolle in diesem Sinn bezeichnet eine Rolle, die in Förderrichtung an vorderster oder hinterster Stelle des Obertrums angeordnet ist, und die das Obertrum nach unten hin bzw. von unten kommend in Richtung Untertrum umlenkt. Eine zweite Umlenkrolle kann entweder antriebslos oder als Antriebsrolle ausgeführt werden. Bei einer zweiten antriebslosen Umlenkrolle kann der Antrieb im Bereich des Untertrums vorgesehen werden. Eine solcher Antrieb im Bereich des Untertrums kann eine Antriebsrolle mit schräg oder senkrecht stehender Rotationsachse aufweisen, so dass besonders schmale Förderstreckenbreiten verwirklicht werden können.

Bei einer Ausführung bei der die zweite Umlenkrolle als Antriebsrolle ausgebildet ist, kann die Rotationsachse der Antriebsrolle parallel zum Radius verlaufen, der sich vom Kurvenmittelpunkt zum Mittelpunkt der Antriebsrolle erstreckt. Die Antriebsrolle kann mit einem Elektromotor verbunden sein, der in axialer Richtung an der Antriebsrolle mit der Antriebsrolle verbunden ist. Die Antriebsrolle kann z.B. als angetriebe Förderrolle ausgebildet sein. Eine angetriebene Förderrolle bezeichnet eine Förderrolle, bei der ein Elektromotor im Inneren des zylindrischen Rollenmantels angeordnet ist und den Rollenmantel antreibt. Diese Art von angetriebenen Förderrollen hat einen geringen Durchmesser und daher in radialer Richtung einen geringen Platzbedarf. Außerdem werden angetriebene Förderrollen in großen Stückzahlen hergestellt, so dass diese Antriebe günstig erhältlich sind.

Bei einer Ausführung des Rollenförderers als Kurvenrollenförderer kann der Kurvenrollenförderer ferner eine Untertrumumlenkrolle aufweisen, welche derart angeordnet ist, dass ein erster Teil des Untertrums, der von der ersten Umlenkrolle kommend zur Untertrumumlenkrolle führt, entlang einer Geraden verläuft, die in einer Ebene liegt, die senkrecht zur Rotationsachse der ersten Umlenkrolle steht und durch den Antriebsriemen im Bereich der ersten Umlenkrolle verläuft.

Bei einem solchen Kurvenrollenförderer kann lediglich eine einzige Untertrumumlenkrolle vorgesehen sein. Diese einzige Untertrumumlenkrolle kann in Bezug auf die zweite Umlenkrolle derart angeordnet sein, dass ein zweiter Teil des Untertrums, der von der zweiten Umlenkrolle kommend zur Untertrumumlenkrolle führt, entlang einer Geraden verläuft, die in einer Ebene liegt, die senkrecht zur Rotationsachse der zweiten Umlenkrolle steht und durch den Antriebsriemen im Bereich der zweiten Umlenkrolle verläuft. Die Rotationsachse der Untertrumumlenkrolle kann senkrecht zur Förderebene stehen.

Bei einer Ausführung bei der die zweite Umlenkrolle als antriebslose Umlenkrolle ausgebildet ist, kann der Kurvenrollenförderer eine im Bereich des Untertrums angeordnete Antriebsrolle aufweisen.

Die im Bereich des Untertrums angeordnete Antriebsrolle kann eine im Wesentlichen senkrechte Rotationsachse oder im Verhältnis zur Förderebene um mehr als 5° schräg stehende Rotationsachse aufweisen. Diese Ausführungsform hat, insbesondere bei einer senkrecht stehenden Rotationsachse, den Vorteil, dass die Antriebsrolle quer zur Förderebene nur einen geringen Platzbedarf aufweist. So können besonders schmale Rollenförderer verwirklicht werden.

Eine weitere Ausführungsform eines solchen Kurvenrollenförderers kann zumindest eine Untertrumumlenkrolle aufweisen, die im Bereich des Untertrums derart angeordnet ist, dass das Untertrum die Antriebsrolle um zumindest 180° umschlingt.

Dabei kann eine einzige Untertrumumlenkrolle ausreichend sein, um das Untertrum entlang eines Mäanders laufen zu lassen, sodass das Untertrum die Antriebsrolle um zumindest 180° umschlingt. Diese einzige Untertrumumlenkrolle kann in Bezug auf die erste Umlenkrolle derart angeordnet sein, dass ein Teil des Untertrums, der von der ersten Umlenkrolle kommend zur Untertrumumlenkrolle führt, entlang einer Geraden verläuft, die in einer Ebene liegt, die senkrecht zur Rotationsachse der Umlenkrolle steht und durch den Antriebsriemen im Bereich der ersten Umlenkrolle verläuft. In dem Fall kann die Antriebsrolle derart angeordnet sein, dass das Untertrum die Untertrumumlenkrolle um mehr als 180° umschlingt und in Richtung der Antriebsrolle verläuft. Ein mittlerer Teil des Untertrums erstreckt sich in dem Fall zwischen der Untertrumumlenkrolle und der Antriebsrolle. Ein zweiter Teil des Untertrums, der von der zweiten Umlenkrolle kommend zur Antriebsrolle führt, kann entlang einer Geraden verlaufen, die in einer Ebene liegt, die senkrecht zur Rotationsachse der zweiten Umlenkrolle steht und durch den Antriebsriemen im Bereich der zweiten Umlenkrolle verläuft.

Bei einer anderen Ausführungsform, bei der die zweite Umlenkrolle als antriebslose Umlenkrolle ausgebildet ist, können zwei Untertrumumlenkrollen vorgesehen sein, die entsprechend angeordnet sind und das Untertrum zur Antriebsrolle hin umleiten, so dass sich der gewünschte Umschlingungswinkel an der Antriebsrolle ergibt. Dabei kann die Antriebsrolle zwischen den beiden Untertrumumlenkrollen angeordnet sein, das heißt im Bereich des Untertrums, das sich zwischen den beiden Untertrumumlenkrollen erstreckt. Auch bei dieser Ausführungsform kann ein erster Teil des Untertrums, der von der ersten Umlenkrolle kommend zur ersten Untertrumumlenkrolle führt, entlang einer Geraden verlaufen, die in einer Ebene liegt, die senkrecht zur Rotationsachse der Umlenkrolle steht und durch den Antriebsriemen im Bereich der ersten Umlenkrolle verläuft. Entsprechend kann bei dieser Ausführungsform ein zweiter Teil des Untertrums, der von der zweiten Umlenkrolle kommend zur zweiten Untertrumumlenkrolle führt, entlang einer Geraden verlaufen, die in einer Ebene liegt, die senkrecht zur Rotationsachse der zweiten Umlenkrolle steht und durch den Antriebsriemen im Bereich der zweiten Umlenkrolle verläuft.

Im Folgenden werden einzelne Ausführungsformen zur Lösung der Aufgabe anhand der Figuren beispielhaft beschrieben. Dabei weisen die einzelnen beschriebenen Ausführungsformen zum Teil Merkmale auf, die nicht zwingend erforderlich sind, um den beanspruchten Gegenstand auszuführen, die aber in bestimmten Anwendungsfällen gewünschte Eigenschaften bereit stellen. So sollen auch Ausführungsformen als unter die beschriebene technische Lehre fallend offenbart angesehen werden, die nicht alle Merkmale der im Folgenden beschriebenen Ausführungsformen aufweisen. Ferner werden um unnötige Wiederholungen zu vermeiden bestimmte Merkmale nur in Bezug auf einzelne der im Folgenden beschriebenen Ausführungsformen erwähnt. Es wird darauf hingewiesen, dass die einzelnen Ausführungsformen daher nicht nur für sich genommen sondern auch in einer Zusammenschau betrachtet werden sollen. Anhand dieser Zusammenschau wird der Fachmann erkennen, dass einzelne Ausführungsformen auch durch Einbeziehung von einzelnen oder mehreren Merkmalen anderer Ausführungsformen modifiziert werden können. Es wird darauf hingewiesen, dass eine systematische Kombination der einzelnen Ausführungsformen mit einzelnen oder mehreren Merkmalen, die in Bezug auf andere Ausführungsformen beschrieben werden, wünschenswert und sinnvoll sein kann, und daher in Erwägung gezogen und auch als von der Beschreibung umfasst angesehen werden soll.

### Kurze Beschreibung der Zeichnungen

- Figur 1a: zeigt eine erste Ausführungsform eines Rollenförderers von unten.
- Figur 1b: zeigt einen Ausschnitt aus Figur 1 a.
- Figur 1c: zeigt die erste Ausführungsform des Rollenförderers aus Figur 1 a in einer perspektivischen Ansicht von schräg unten.
- Figur 2a: zeigt eine zweite Ausführungsform eines Rollenförderers von unten.
- Figur 2b: zeigt einen Ausschnitt aus Figur 2a.
- Figur 2c: zeigt die zweite Ausführungsform des Rollenförderers aus Figur 2a in einer perspektivischen Ansicht von schräg unten.
- Figur 3a: zeigt einen Ausschnitt einer Ansicht des Rollenförderers in einer senkrecht auf die Förderebene des Rollenförderers stehenden Blickrichtung von oben.
- Figur 3b: zeigt den in Figur 3a dargestellten Bereich in einer perspektivischen Ansicht schräg von unten.
- Figuren 4a bis 4c: zeigen ein Förderstreckenlagerelement in unterschiedlichen Ansichten.
- Figur 5: zeigt ein kurvenaußenseitiges Lagerelement.
- Figur 6: zeigt ein Befestigungselement zur Befestigung der Förderstreckenlagerelemente

### Detaillierte Beschreibung der Zeichnung

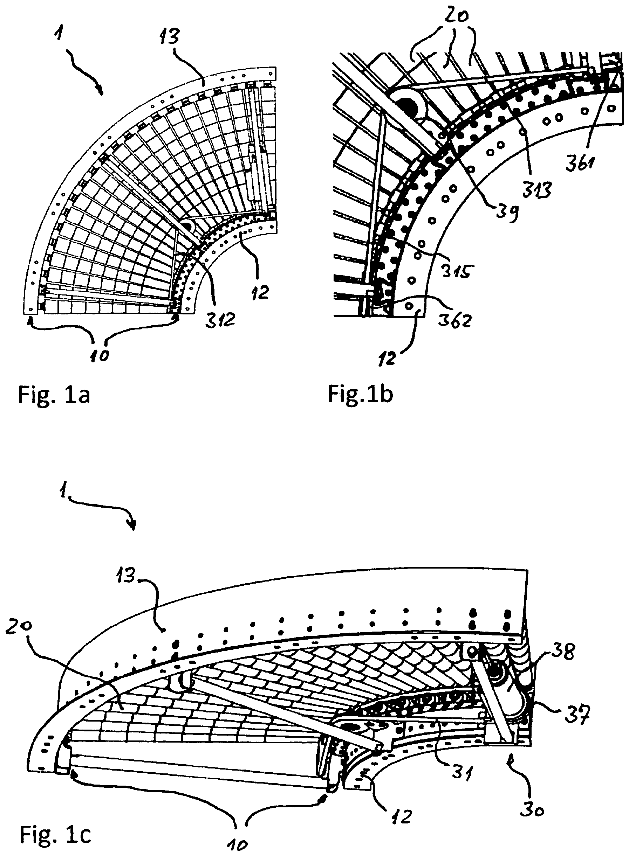

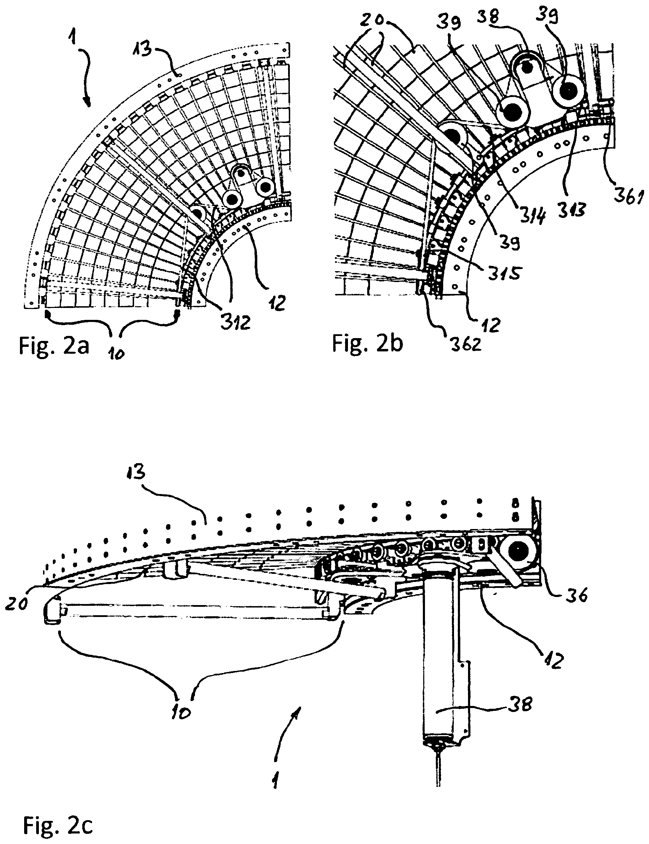

Die Figuren 1a bis 1 cund die Figuren 2a bis 2c zeigen zwei verschiedene Ausführungsformen eines Rollenförderers, der jeweils als Kurvenrollenförderer 1 ausgebildet ist, wobei die erste Ausführungsform einen liegenden Antriebsmotor 38 und die zweite Ausführungsform einen stehenden Antriebsmotor 38 aufweist. Dabei zeigen Figur 1 a und Figur 2a jeweils das gesamte Kurvensegment von der Unterseite des Rollenförderers 1. Figuren 1b und 2b zeigen jeweils einen vergrößerten Ausschnitt aus der gleichen Blickrichtung. Figuren 1 c und 2c zeigen das jeweilige Kurvensegment in einer perspektivischen Ansicht von schräg unten.

In der dargestellten Ausführungsformen ist der Antriebsmotor 38 in Form einer angetriebenen Förderrolle ausgebildet, an deren einem axialen Ende eine Antriebsrolle 37 befestigt ist. Angetriebene Förderrollen bezeichnen Förderrollen, die in Rollenförderern als Förderrollen eingesetzt werden und die innerhalb des zylindrischen Förderrollenmantels eine Antriebseinheit, insbesondere einen Elektromotor aufweisen. Diese Art von angetriebenen Förderrollen werden in großen Stückzahlen produziert und sind daher auf den Markt günstig zu erwerben. Außerdem weisen angetriebene Förderrollen im Vergleich zu anderen Antriebsmotoren einen verhältnismäßig geringen Durchmesser auf, was insbesondere bei der waagerechten Anordnung des Antriebsmotors 38 zu einer Platz sparenden Konstruktionsform führt. In den dargestellten Ausführungsformen werden diese angetriebenen Förderrollen nicht als Förderrollen im Wortsinn eingesetzt, da sie unterhalb der Förderebene angeordnet sind und nicht in unmittelbarer Berührung zu den auf dem Rollenförderer 1 transportierten Fördergütern kommen.

Bei beiden Ausführungsformen weist der Rollenförderer 1 einen Förderrahmen 10 mit einem Innenprofil 12 und einem Außenprofil 13 auf. Sowohl das Innenprofil 12 als auch das Außenprofil 13 weisen einen kurvenförmigen Verlauf auf, der in den dargestellten Ausführungsformen entlang eines Abschnitts einer Kreislinie verläuft. Dabei weisen die Kreislinien sowohl des Innenprofils 12 als auch des Außenprofils 13 jeweils den gleichen Mittelpunkt auf, der auch als Kurvenmittelpunkt bezeichnet werden kann. Die dargestellten Kurvensegmente beschreiben jeweils ein 90° Segment. Kurvenrollenförderer können jedoch je nach Einsatzgebiet auch andere Winkel abdecken.

Entlang der Förderstrecke sind zwischen dem Innenprofil 12 und dem Außenprofil 13 jeweils eine Vielzahl von Förderrollen 20 angeordnet. Zur Lagerung der Förderrollen 20 sind entlang des Innenprofils 12 eine Vielzahl von Förderstreckenlagerelementen 50 und entlang des Außenprofils 13 eine Vielzahl von kurvenaußenseitigen Förderstreckenlagerelementen 60 vorgesehen, die nachfolgend mit Bezug auf die anderen Figuren noch im Detail beschrieben werden.

Beide dargestellten Ausführungsformen weisen einen Antriebsriemen 31 mit einem runden Querschnitt auf. Der Antriebsriemen 31 kann auch als Rundriemen bezeichnet werden. Rundriemen weisen gegenüber von Antriebsriemen mit anderen Querschnitten den Vorteil auf, dass sie quer zur Längserstreckung des Riemens in beliebige Richtungen gebogen werden können, so dass sie in unterschiedliche Richtungen gut umgelenkt werden können.

In beiden Ausführungsformen sind die Antriebsriemen 31 als Endlosriemen ausgebildet, die jeweils ein Obertrum 311 und einen Untertrum 312 aufweisen. Der Begriff Obertrum 311 bezeichnet den oberen Abschnitt des Antriebsriemens 31, der oberhalb der Umlenkrollen 36 verläuft. Der Begriff Untertrum 312 bezeichnet den Teil des Endlosriemens, der in der dargestellten Ausführungsform unterhalb der Umlenkrollen 36 zurückläuft.

Das Obertrum 311 verläuft bei beiden Ausführungsformen kurveninnenseitig im Bereich des Innenprofils 12 im Wesentlichen entlang eines Abschnitts einer Kreislinie. Hierzu sind im Bereich des Innenprofils 12 eine Vielzahl von Stützrollen 33 vorgesehen, die das Obertrum 311 zur Kurveninnenseite hin abstützen. Die Anordnung der Stützrollen 33 wird in Bezug auf die anderen Figuren detailliert beschrieben. Da das Obertrum 311 zwischen jeder Stützrolle 33 im wesentlichen entlang einer Geraden verläuft, kann der Verlauf des Obertrums 311 auch als Polygonzug beschrieben werden. Je mehr Stützrollen 33 vorgesehen werden, desto feiner ist der Polygonzug abgestuft und desto mehr ist der Polygonzug einer Kreislinie angenähert. In den dargestellten Ausführungsformen ist alle zwei Förderrollen 20 eine Stützrolle 33 vorgesehen. Denkbar ist jedoch ebenfalls, dass zwischen jeweils zwei Förderrollen 20 eine Stützrolle 33 vorgesehen ist, oder dass nur eine Stützrolle 33 alle drei oder alle vier Förderrollen 20 vorgesehen ist.

Auf dem entlang der Kurvenlinie gespannten Obertrum 311 liegen die kurveninnenseitigen Bereiche der Förderrollen 20 auf. Jede der Förderrollen 20 steht im Wesentlichen senkrecht auf den Verlauf der Kurvenlinie. Da der Verlauf des Obertrums 311 der Kurvenlinie in diesem Bereich polygonartig stark angenähert ist, tangiert das Obertrum 311 jede der Förderrollen 20 im Wesentlichen senkrecht. Im Betrieb des Rollenförderers 1 kann daher die Relativbewegung zwischen den durch das Obertrum 311 angetriebenen Förderrollen 20 als im Wesentlichen rollende Abtragung beschrieben werden, weil die Relativbewegung annähernd keine Bewegungskomponente in Längsrichtung der jeweiligen Förderrolle 20 aufweist. Durch diese Gestaltung kann Reibung und Verschleiß des Antriebsriemens minimiert werden.

Um einen möglichst ebenen Verlauf der Förderebene und eine gleichmäßige Übertragung der Antriebskräfte zwischen Antriebsriemen 31 und Förderrollen 20 zu ermöglichen, sind unterhalb des Obertrums 311 eine Vielzahl von Tragrollen 32 vorgesehen, welche das Gewicht der Förderrollen 20 sowie der auf dem Rollenförderer 1 beförderten Lasten tragen. Die Tragrollen 32 und deren Befestigung wird in Bezug auf die folgenden Figuren detailliert beschrieben.

Aufgrund der unterschiedlichen Anordnungen des Antriebsmotors 38 unterscheiden sich die beiden Ausführungsformen, insbesondere hinsichtlich des Verlaufs des Untertrums 312.

Bei der Ausführungsform mit dem liegenden Antriebsmotor 38, die in den Figuren 1 a, 1b und 1 c dargestellt wird, ist lediglich eine einzige Untertrumumlenkrolle 39 erforderlich und eine der Umlenkrollen 36 ist als Antriebsrolle 37 ausgeführt. Dabei ist die Untertrumumlenkrolle 39 derart angeordnet, dass ein tangentialer Verlauf des ersten Teils des Untertrums 313 und des zweiten Teils des Untertrums 315 an den Kurvenverlauf gewährleistet ist. So wird ermöglicht, dass das Untertrum 312 sowohl von der ersten Umlenkrolle 361 als auch von der zweiten Umlenkrolle 362 jeweils senkrecht zum Verlauf der Rotationsachsen der Umlenkrollen 361, 362 auf die Umlenkrollen 361, 362 abläuft beziehungsweise aufläuft. So wird die Reibung zwischen der ersten Umlenkrolle 361 und dem ersten Teil des Untertrums 313 sowie die Reibung zwischen der zweiten Umlenkrolle 362 und dem zweiten Teil des Untertrums 315 minimiert. Diese Ausführungsform kommt daher mit einer minimalen Zahl an Umlenkungen aus, was zu einem besonders geringen Energiebedarf und zu niedrigen Geräuschemissionen führt.

Bei der Ausführungsform mit dem stehenden Antriebsmotor 38, die in den Figuren 2a, 2b und 2c dargestellt wird, sind zwei Untertrumumlenkrollen 39 vorgesehen, welche die Antriebsrolle 37 flankieren, so dass ein für die Kraftübertragung erforderlicher Umschlingungswinkel des Antriebsriemens 31 um die Antriebsrolle 37 gewährleistet ist. In der dargestellten Ausführungsform ist eine weitere Untertrumumlenkrolle 39 vorgesehen, um eine Berührung des Untertrums 312 mit dem Innenprofil 12 zu vermeiden. Dabei sind auch bei dieser Ausführungsform die Untertrumumlenkrollen 39 derart angeordnet, dass ein tangentialer Verlauf des ersten Teils des Untertrums 313 und des zweiten Teils des Untertrums 315 gewährleistet ist. Auch hier wird demnach einen schräger Verlauf des Antriebsriemens 31 zu einer der Umlenkrollen 361, 362 vermieden. Die senkrechte Anordnung des Antriebsmotors 38 führt zu einem geringen Platzbedarf in radialer Richtung des Kurvenverlaufs. Bei dieser Ausführungsform können daher auch deutlich schmale Rollenbahnen verwirklicht werden.

Je nach Platzbedarf kommen weitere Ausführungsformen infrage, bei denen der Antriebsmotor 38 z.B. auch schräg stehen kann. Dabei ermöglicht der Rundriemen aufgrund seiner Umlenkbarkeit in verschiedene Richtungen verschiedenste Ausführungen.

In den dargestellten Ausführungsformen sind die Antriebsriemen 31 aus einem Material hergestellt, welches Polyurethan umfasst. Dabei können PU-Riemen mit oder ohne Seele verwendet werden. Derartige PU-Riemen, inbsesondere die PU-Riemen ohne Seele, besitzen gute elastische Eigenschaften und können je nach Ausführungsform um bis zu 6% gedehnt werden. Aufgrund dieser Elastizität können gewisse Toleranzen bei der Anordnung der verschiedenen Umlenkrollen 36 und der Untertrumumlenkrollen 39 aufgrund der Dehnfähigkeit des Antriebsriemens 31 ausgeglichen werden, so dass bei dieser Ausführungsform auf eine aufwändige Riemenspannvorrichtung verzichtet werden kann.

Mit Bezug auf die übrigen Figuren werden im Folgenden die Förderstreckenlagerelemente 50, die am Innenprofil 12 des Förderrahmens 10 befestigt sind, die kurvenaußenseitigen Förderstreckenlagerelemente 60 sowie deren Befestigung beschrieben.

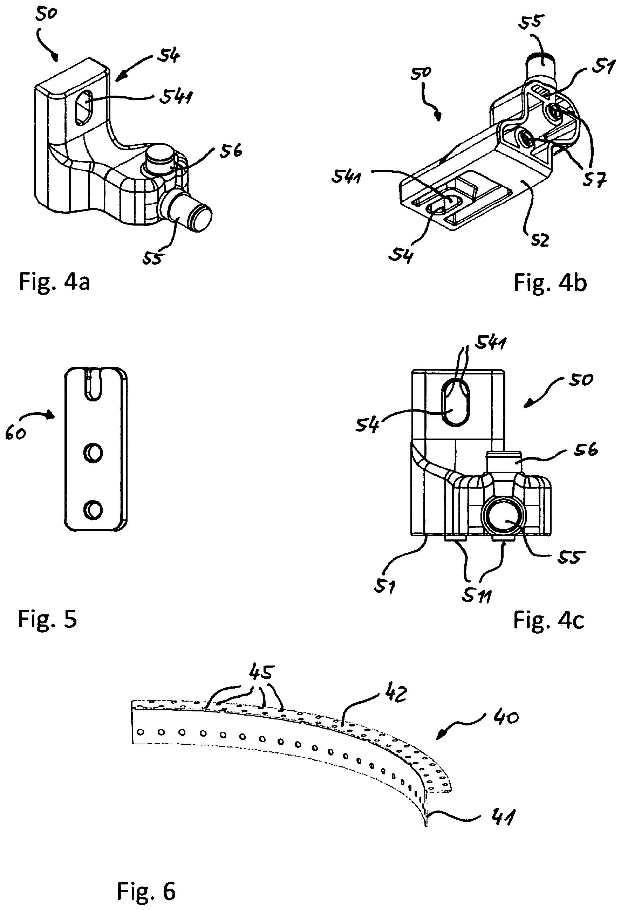

In Figur 4a ist ein Förderstreckenlagerelement 50 in einer perspektivischen Ansicht von schräg oben dargestellt. Das gleiche Förderstreckenlagerelement 50 ist in einer perspektivischen Ansicht von schräg unten in Figur 4b und in einer Seitenansicht in Figur 4c dargestellt. Das Förderstreckenlagerelement 50 weist eine längliche Lagerstelle 54 auf. Die Lagerstelle 54 ist in der dargestellten Ausführungsform als Durchgangsloch ausgebildet. Die Lagerstelle 54 weist zwei im Wesentlichen parallel verlaufende Lagerstellenbegrenzungsflächen 541 auf. Die Lagerstellenbegrenzungsflächen 541 weisen einen Abstand zueinander auf, der im Wesentlichen dem Durchmesser eines Achsendes 22 einer Förderrolle 20 entspricht. Wenn ein Achsende 22 in die Lagerstelle 54 eingesetzt wird, kann sich das Achsende in der Lagerstelle 54 nach oben und nach unten bewegen und wird über die Lagerstellenbegrenzungsflächen 541 in seitlicher Richtung fixiert.

Auf der anderen Seite der jeweiligen Förderrolle 20 können kurvenaußenseitige Förderstreckenlagerelemente 60 vorgesehen sein. Diese kurvenaußenseitigen Förderstreckenlagerelemente 60 können eine Gestaltung aufweisen, wie sie in Figur 5 dargestellt ist. Ein solches kurvenaußenseitiges Förderstreckenlagerelement 60 kann demnach eine nach oben offene Lagerstelle und ein oder mehr Befestigungslöcher aufweisen. Über die Befestigungslöcher kann das Lagerelement an dem Außenprofil 13 festgeschraubt werden. Diese Art der Befestigung ist lediglich beispielhaft. Andere Arten der Befestigung sind ebenfalls denkbar. Die nach oben offene Lagerstelle ermöglicht eine einfache Montage der Förderrollen, wonach zuerst ein Achseende 22 in die Lagerstelle 54 des Förderstreckenlagerelements 50 eingesteckt wird und dann das gegenüberliegende Achsende der Förderrolle 20 in die nach oben offene Lagerstelle des kurvenaußenseitigen Förderstreckenlagerelements 60 eingeschwenkt wird.

Zur Befestigung der Förderstreckenlagerelemente 50 ist zumindest ein Befestigungselement 40 vorgesehen. In der dargestellten Ausführungsform weist das Befestigungselement 40 einen Befestigungsbereich 41 zur Befestigung des Befestigungselements 40 an dem Innenprofil 12 auf. Ferner weist das Befestigungselement 40 einen im Wesentlichen waagerecht verlaufenden Auflagebereich 42 auf. Das Befestigungselement 40 kann z.B. als Blechbiegeteil ausgeführt sein. Denkbar ist ebenfalls, dass der Befestigungsbereich 41 und der Auflagebereich 42 als zwei getrennte Teile hergestellt werden, die anschließend, z.B. durch Schweißen, miteinander verbunden werden.

Auf den Auflagebereich 42 des Befestigungselements 40 kann eine Vielzahl von Förderstreckenlagerelementen 50 aufgesetzt werden. Dabei können die Konsolenanlageflächen 51 der Förderstreckenlagerelemente 50 eben auf dem Auflagebereich 42 des Befestigungselements 40 aufliegen, so dass ein äquidistanter Abstand der unteren Bereiche der Lagerstellen 54 zum Auflagebereich 42 sichergestellt wird. Ferner können die Förderstreckenlagerelemente 50 jeweils Positionsvorsprünge 511 im Bereich der Konsolenanlagefläche 51 aufweisen, die in korrespondierende Positionsausnehmungen 45 eingreifen können, die im Auflagebereich 42 des Befestigungselements 40 vorgesehen sind. Durch die Positionsausnehmungen 45 und die korrespondierenden Positionsvorsprünge 511 kann eine definierte Position des Förderstreckenlagerelements 50 sichergestellt werden. In der dargestellten Ausführungsform sind pro Förderstreckenlagerelement 50 jeweils zwei Positionsvorsprünge 511 vorgesehen. Ein Förderstreckenlagerelement 50 kann jedoch auch lediglich einen Positionsvorsprung 511 aufweisen. In dem Fall können weitere Elemente einer Festlegung einer definierten Position des Förderstreckenlagerelements 50 dienen. Z.B. kann eine Seitenprofilanlagefläche 52 auf der Rückseite des Förderstreckenlagerelements 50 vorgesehen sein, welche in Anlage mit dem Innenprofil 12 gebracht werden kann.

Wie in den Figuren ersichtlich ist, weist jedes Förderstreckenlagerelement 50 eine Tragrollenachse 55 und eine Stützrollenachse 56 auf. Sowohl Tragrollenachse 55 als auch Stützrollenachse 56 sind entlang des Verlaufs des Obertrums 311 im Verhältnis zur Position der Lagerstelle 54 um einen bestimmten Abstand versetzt angeordnet. In der dargestellten Ausführungsform entspricht der bestimmte Abstand dem halben Abstand einer Förderrolle 20 zur benachbarten Förderrolle 20. Durch diese Gestaltung kann erreicht werden, dass Tragrollen 32 beziehungsweise Stützrollen 33, die auf die korrespondierenden Tragrollenachsen 55 beziehungsweise Stützrollenachsen 56 aufgesteckt werden, jeweils in etwa mittig zwischen zwei Förderrollen 20 positioniert sind. Durch diese Gestaltung wird ein hinsichtlich Reibung und Verschleiß günstiger Verlauf des Obertrums 311 erzielt.

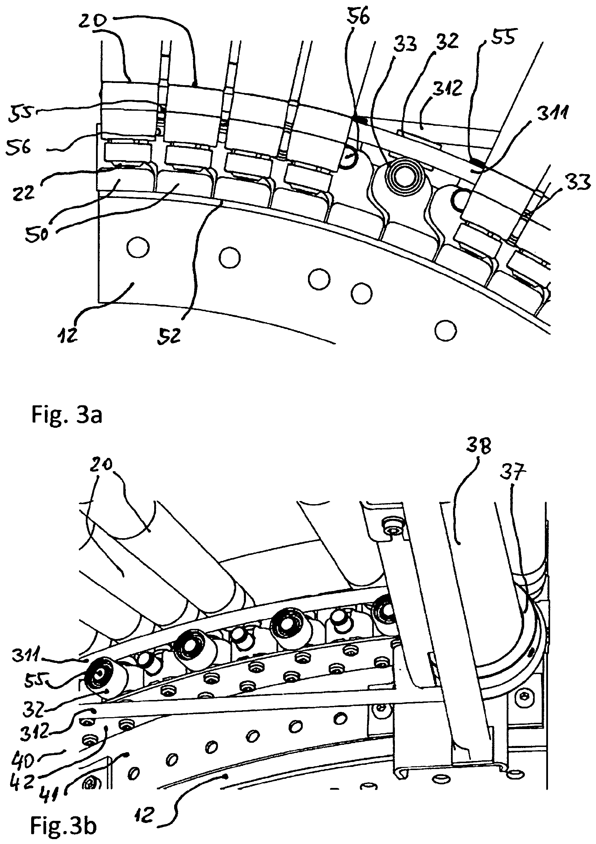

Der Verlauf des Obertrums 311 im Verhältnis zu den angrenzenden Komponenten ist in Figuren 3a und 3b genauer dargestellt. Dabei zeigt Figur 3a eine Ansicht des Rollenförderers in einer senkrecht auf die Förderebene stehenden Blickrichtung von oben. Figur 3b zeigt den gleichen Bereich in einer perspektivischen Ansicht schräg von unten.

Insbesondere in Figur 3b ist gut ersichtlich, dass die Tragrollen 32 als bordlose Tragrollen 32 ausgebildet sind, die eine allgemein zylindrische Tragrollenoberfläche aufweisen. Diese Gestaltung der Tragrollen 32, die auf der Kurvenaußenseite der jeweiligen Tragrolle kein Bord aufweisen, hat den Vorteil einer besonders einfachen Montage des Antriebsriemens, der bei der Montage nicht durch den engen Spalt zwischen Tragrollenbord und Förderrollen gezwungen werden muss. In Verbindung mit den dargestellten Ausführungsformen der Untertrumführung mit liegendem bzw. stehendem Antriebsmotor kann der Antriebsriemen in einem Schadensfall ausgetauscht werden, ohne Komponenten des Rollenförderers demontieren zu müssen. Da der in der Ausführungsform verwendete PU-Rundriemen elastisch ist und auf deshalb auch auf eine Spannvorrichtung verzichtet werden kann, ist bei der Montage auch keine gesonderte Einstellung der Antriebsriemenspannung erforderlich. Ein Austausch des Antriebsriemens kann daher in kürzester Zeit erfolgen. Die Ausfallzeiten können auf ein Minimum reduziert werden.

In diesen Figuren ist dargestellt, dass die Förderstreckenlagerelemente 50 jeweils durch zwei Schrauben an dem Auflagebereich 42 des Befestigungselements 40 angeschraubt sind. Zu diesem Zweck sind in den Förderstreckenlagerelementen 50 jeweils zwei Befestigungslöcher 57 vorgesehen. Die Positionsvorsprünge 511 sind als kragenförmiger Bereich um die Befestigungslöcher 57 ausgebildet und stehen etwas über die Konsolenanlagefläche 51 vor. Demnach können die Positionsvorsprünge 511 in die Positionsausnehmungen 45 eingesetzt und die Förderstreckenlagerelemente 50 anschließend durch Schrauben an dem Befestigungselement 40 befestigt werden.

Im montierten Zustand sind die Förderstreckenlagerelemente 50 derart angeordnet, dass sich die Tragrollenachsen 55 im Wesentlichen in waagerechte Richtung entlang eines Radiusstrahls erstreckt, der sich jeweils vom Kurvenmittelpunkt durch die jeweilige Tragrollenachse erstreckt. Die Stützrollenachsen 56 weisen eine aufrechte im Wesentlichen senkrechte Position auf. Sowohl die Tragrollen 32 als auch die Stützrollen 33 weisen eine kreiszylindrische Form auf, so dass der Antriebsriemen 31 mit dem runden Querschnitt die Rollen jeweils lediglich punktförmig berührt. Da die Punkte, an denen die Tragrollen 32 den Antriebsriemen 31 berühren, um die Hälfte des Durchmessers des Antriebsriemens 31 weiter vom Kurvenmittelpunkt entfernt liegen als die Punkte, an denen die Stützrollen 33 den Antriebsriemen 31 berühren, weist der Antriebsriemen, der sich entlang einer Kreisbahn um den Kurvenmittelpunkt bewegt in diesen Punkten unterschiedliche Geschwindigkeiten auf, so dass sich die Stützrollen 33 etwas langsamer drehen als die Tragrollen 32. Die Lagerung des Antriebsriemens 31 über getrennte Tragrollen 32 und Stützrollen 33 vermindert daher gegenüber einer Lagerung durch eine Rolle mit einer konkaven Oberfläche oder einer Tragrolle mit Seitenbord eine gleitende Abtragung des Antriebsriemens an bestimmten Oberflächenbereichen.

Die senkrechte Lagerung der zylindrischen Stützrollen 33 verhindert, dass die Andruckkraft zwischen Antriebsriemen 31 und Stützrolle 33 eine Komponente in Richtung der Rotationsachse der Stützrolle 33 aufweist. Es sind daher keine zusätzlichen Befestigungsmittel erforderlich, welche ein Abrutschen des Antriebsriemens 31 von den Stützrollen 33 nach oben verhindern. Das Gewicht der Förderrollen 20 ist zu diesem Zweck auch im Fall von Trumschwingungen ausreichend, so dass bei dieser Ausführungsform auch ein Förderstreckenlagerelement 50 mit einer nach oben offenen Lagerstelle 54 verwendet werden könnte. Bei dem vorliegend beschriebenen Förderstreckenlagerelement 50 ist die Lagerstelle 54 jedoch als oben geschlossenes Langloch ausgebildet, so dass sich das Achsende 23 nur soweit nach oben bewegen kann, bis es an dem oberen Ende der Lagerstellen anschlägt. In dieser oberen Position verhindert der auf der Antriebsriemenseite angeordnete Oberflächenbereich der Förderrolle 20 ein Ausweichen des Antriebsriemens nach oben, das zu einem Abrutschen des Antriebsriemens von den Stützrollen 33 führen könnte.

Die Umlenkrollen 36, von denen eine als Antriebsrolle 37 ausgeführte Umlenkrolle in Figur 3b gezeigt ist, weisen in der dargestellten Ausführungsform eine konkave Oberfläche auf, so dass der Antriebsriemen 31 im Umschlingungsbereich sicher geführt ist. Insbesondere wenn eine der Umlenkrollen 36 als Antriebsrolle 37 ausgebildet ist, wie dies z.B. bei einem liegenden Antriebsmotor 38 der Fall sein kann, ist eine solche Oberflächengestaltung sinnvoll, da bei dieser Ausführung auch die Kraftübertragung zwischen Antriebsrolle 37 und Antriebsriemen 31 verbessert wird.

### Bezugszeichenliste

- 1: Rollenförderer
- 10: Förderrahmen
- 12: Innenprofil
- 13: Außenprofil

- 20: Förderrolle

- 30: Antriebssystem
- 31: Antriebsriemen
- 311: Obertrum
- 312: Untertrum
- 313: erster Teil des Untertrums
- 314: mittlerer Teil des Untertrums
- 315: zweiter Teil des Untertrums
- 32: Tragrolle
- 33: Stützrolle
- 36: Umlenkrolle
- 361: erste Umlenkrolle
- 362: zweite Umlenkrolle
- 37: Antriebsrolle
- 38: Antriebsmotor
- 39: Untertrumumlenkrolle

- 40: Befestigungselement (konsolenartiges Blechbiegeteil)
- 41: Befestigungsbereich
- 42: Auflagebereich
- 45: Positionsausnehmung (für Positionsvorsprung am Förderstreckenlagerelement)

- 50: Förderstreckenlagerelement
- 51: Konsolenanlagefläche
- 511: Positionsvorsprung
- 52: Seitenprofilanlagefläche
- 54: Lagerstelle
- 541: Lagerstellenbegrenzungsfläche
- 55: Tragrollenachse
- 56: Stützrollenachse
- 57: Befestigungsloch
- 58: Positionsvorsprung

- 60: kurvenaußenseitiges Förderstreckenlagerelement

- 70: Lagerblock

## Patentansprüche

1. Förderstreckenlagerelement (50) zur Anbringung an einen Förderrahmen (10) eines Rollenförderers (1), wobei das Förderstreckenlagerelement (50) zumindest eine Lagerstelle (54) zur Lagerung einer Förderrolle (20) an dem Förderrahmen aufweist, wobei das Förderstreckenlagerelement (50) ferner zumindest eine Tragrollenachse (55) zur Lagerung einer Tragrolle (32) sowie eine Stützrollenachse (56) zur Lagerung einer Stützrolle (33) aufweist,
wobei die Tragrollenachse (55) sich in einer Richtung erstreckt, dass sich die Rotationsachse der an der Tragrollenachse (55) anzuordnenden Tragrolle (32) im Wesentlichen parallel zu einer Rotationsachse einer in der Lagerstelle (54) zu lagernden Förderrolle (20) erstreckt,
wobei die Stützrollenachse (56) sich in einer Richtung erstreckt, dass sich die Rotationsachse der Stützrollenachse (56) anzuordnenden Stützrolle (33) im Wesentlichen senkrecht zu einer Förderebene erstreckt und
wobei das Förderstreckenlagerelement (50) einschließlich der zumindest einen Lagerstelle (54), der zumindest einen Stützrollenachse (56) und der zumindest einen Tragrollenachse (55) einstückig als Spritzgussteil hergestellt ist.

2. Förderstreckenlagerelement (50) nach Anspruch 1 , wobei die Lagerstelle (54) zur Ermöglichung einer schwimmenden Lagerung als längliche Ausnehmung ausgebildet ist.

3. Förderstreckenlagerelement (50) nach einem der vorstehenden Ansprüche, wobei die Lagerstelle (54) eine längliche Form aufweist und nach oben geschlossen ist.

4. Nachrüstset für einen Rollenförderer (1) umfassend eine Mehrzahl von Förderstreckenlagerelementen (50) nach einem der Ansprüche 1 bis 3, Befestigungselemente (40) zur Befestigung der Förderstreckenlagerelemente 0,5 ≤ an einem Förderrahmen (10), eine Mehrzahl von Förderrollen (20), sowie ein Antriebssystem (30) umfassend zumindest einen Antriebsriemen (314), eine Mehrzahl von Tragrollen (32) sowie Stützrollen (33), zumindest eine Umlenkrolle (36), und zumindest eine Antriebsrolle (37), die mit einem Antriebsmotor (38) verbunden ist.

5. Rollenförderer (1) mit einem Förderrahmen (10) und einer Mehrzahl von Förderrollen (20), die in dem Förderrahmen (10) drehbar gelagert sind, und einer Mehrzahl von Förderstreckenlagerelementen (50) nach einem der Ansprüche 1 bis 3, wobei mehrere Förderstreckenlagerelemente (50) durch zumindest ein Befestigungselement (40) an einem Seitenprofil des Förderrahmens (10) befestigt sind, wobei der Rollenförderer (1) ferner ein Antriebssystem (30) mit zumindest einen Antriebsriemen (31) umfasst, der zwischen zwei Umlenkrollen (36) gespannt ist und dessen Obertrum (311) zwischen den Umlenkrollen (36) über eine Mehrzahl von Tragrollen (32) sowie Stützrollen (33) gestützt wird, sowie eine Mehrzahl von Förderrollen (20), die schwimmend auf dem Obertrum (311) des Antriebsriemens (31) gelagert sind.

6. Rollenförderer (1) nach Anspruch 5, wobei das zumindest eine Befestigungselement (40), mit dem mehrere Förderstreckenlagerelemente (50) an dem Seitenprofil des Förderrahmens (10) befestigt sind, als konsolenartiges Blechbiegeteil ausgeführt ist, insbesondere als länglicher Blechstreifen, der in Querrichtung des Blechstreifens nebeneinander verlaufend einen Befestigungsbereich (41) und einen Auflagebereich (42) aufweist, wobei der Auflagebereich (42) im Verhältnis zu einem Klemmbereich in etwa rechtwinklig abgekantet ist.

7. Rollenförderer (1) nach Anspruch 6 oder 7, wobei der Rollenförderer (1) als Kurvenrollenförderer ausgebildet ist, wobei der Antriebsriemen (31) auf der den Förderrollen (20) abgewandten Seite auf der Mehrzahl von Tragrollen (32) verläuft und kurveninnenseitig durch die Mehrzahl von Stützrollen (33) abgestützt wird, so dass der Antriebsriemen (31) entlang einer der Förderkurve folgenden Polygonkurve verläuft.

8. Rollenförderer (1) nach Anspruch 7, wobei das Verhältnis zwischen der Anzahl der angetriebenen Förderrollen F und der Anzahl der Stützrollen S der Beziehung 0,5 ≤ F/S ≤ 4 entspricht.

9. Rollenförderer (1) nach einem der Ansprüche 5 bis 8 , wobei die Förderstreckenlagerelemente (50) jeweils eine Tragrollenachse (55) und eine Stützrollenachse (56) aufweisen, wobei sowohl die Tragrollenachse (55) als auch die Stützrollenachse (56) eines Förderstreckenlagerelements (50) entlang des Verlaufs des Antriebsriemens (31) von der Position der Lagerstelle (54) des Förderstreckenlagerelements (50) ausgehend versetzt angeordnet sind.

10. Rollenförderer (1) nach Anspruch 9, wobei sowohl die Tragrollenachse (55) als auch die Stützrollenachse (56) der jeweiligen Förderstreckenlagerelemente (50) entlang des Verlaufs des Antriebsriemens von der Position der Lagerstelle (54) des Förderstreckenlagerelements (50) ausgehend um in etwa einen halben Förderrollendurchmesser versetzt angeordnet sind.

11. Rollenförderer (1) nach einem der Ansprüche 5 bis 10, wobei die Föderstrekkenlagerelemente jeweils eine mit dem Befestigungselement (40) korrespondierende Konsolenanlagefläche (51) und eine mit dem Seitenprofil korrespondierende Seitenprofilanlagefläche (52) aufweisen.

12. Rollenförderer (1) nach einem der Ansprüche 5 bis 11, wobei die Stützrollen (33) und/oder die Tragrollen (32) als Rollen mit kreiszylindrischen oder kreiskegelförmigen Oberflächen ausgeführt sind.

## Claims

1. A conveyor line bearing element (50) for attachment to a conveyor frame (10) of a roller conveyor (1), wherein the conveyor line bearing element (50) has at least one bearing point (54) for the mounting of a conveyor roller (20) on the conveyor frame, wherein the conveyor line bearing element (50) further has at least one carrying roller axle (55) for the mounting of a carrying roller (32) as well as a support roller axle (56) for the mounting of a support roller (33),
wherein the carrying roller axle (55) extends in a direction such that the axis of rotation of the carrying roller (32) to be arranged on the support roller axle (55) extends mainly parallel to an axis of rotation of a conveyor roller (20) to be mounted in the bearing point (54),
wherein the support roller axle (56) extends in a direction such that the axis of rotation of the support roller (33) to be arranged in the support roller axle (56) extends mainly perpendicular to a conveying plane and
wherein the conveyor line bearing element (50), including the at least one bearing point (54), the at least one support roller axle (56) and the at least one carrying roller axle (55), is produced as one piece as an injection-molded part.

2. The conveyor line bearing element (50) according to claim 1, wherein the bearing point (54) is designed as an elongated recess in order to enable a floating mounting.

3. The conveyor line bearing element (50) according to one of the previous claims, wherein the bearing point (54) has an elongated shape and is closed on top.

4. A retrofitting set for a roller conveyor (1) comprising a plurality of conveyor line bearing elements (50) according to one of claims 1 to 3, fastening elements (40) for the fastening of the conveyor line bearing elements (50) on a conveyor frame (10), a plurality of conveyor rollers (20), as well as a drive system (30) comprising at least one drive belt (314), a plurality of carrying rollers (32) as well as support rollers (33), at least one deflection roller (36) and at least one drive roller (37), which is connected with a drive motor (38).

5. A roller conveyor (1) with a conveyor frame (10) and a plurality of conveyor rollers (20), which are rotatably mounted in the conveyor frame (10), and a plurality of conveyor line bearing elements (50) according to one of claims 1 to 3, wherein several conveyor line bearing elements (50) are fastened on a side profile of the conveyor frame (10) by at least one fastening element (40), wherein the roller conveyor (1) further comprises a drive system (30) with at least one drive belt (31), which is tensioned between two deflection rollers (36) and the top strand (311) of which is supported between the deflection rollers (36) via a plurality of carrying rollers (32) as well as support rollers (33), as well as a plurality of conveyor rollers (20), which are mounted in a floating manner on the top strand (311) of the drive belt (31).

6. The roller conveyor (1) according to claim 5, wherein the at least one fastening element (40), with which several conveyor line bearing elements (50) are fastened on the side profile of the conveyor frame (10), is designed as a console-like bent sheet metal part, in particular as an elongated sheet metal strip, which has a fastening area (41) and a bearing area (42) progressing next to each other in the transverse direction of the sheet metal strip, wherein the bearing area (42) is beveled approximately at a right angle in relation to a clamping area.

7. The roller conveyor (1) according to claim 6 or 7, wherein the roller conveyor (1) is designed as a cam roller conveyor, wherein the drive belt (31) on the side facing away from the conveyor rollers (20) progresses on the plurality of carrying rollers (32) and is supported on the inside of the cam by the plurality of support rollers (33) so that the drive belt (31) progresses along a polygon cam following the conveyor cam.

8. The roller conveyor (1) according to claim 7, wherein the ratio between the number of driven conveyor rollers F and the number of support rollers S is 0,5 ≤ F/S ≤ 4.

9. The roller conveyor (1) according to one of claims 5 to 8, wherein the conveyor line bearing elements (50) each have a carrying roller axle (55) and a support roller axle (56), wherein both the carrying roller axle (55) as well as the support roller axle (56) of a conveyor line bearing element (50) are arranged staggered along the progression of the drive belt (31) starting from the position of the bearing point (54) of the conveyor line bearing element (50).

10. The roller conveyor (1) according to claim 9, wherein both the carrying roller axle (55) as well as the support roller axle (56) of the respective conveyor line bearing elements (50) are staggered by approximately half the conveyor roller diameter along the progression of the drive belt starting from the position of the bearing point (54) of the conveyor line bearing element (50).

11. The roller conveyor (1) according to one of claims 5 to 10, wherein the conveyor line bearing elements each have a console bearing surface (51) corresponding with the fastening element (40) and a side profile bearing surface (52) corresponding with the side profile.

12. The roller conveyor (1) according to one of claims 5 to 11, wherein the support rollers (33) and/or the carrying rollers (32) are designed as rollers with circular-cylindrical or circular-conical surfaces.

## Revendications

1. Elément de support (50) pour une bande de transport destiné à être monté sur un châssis de transport (10) d'un transporteur à rouleaux (1), l'élément de support (50) pour une bande de transport présentant au moins un site de support (54) pour supporter un rouleau de transport (20) sur le châssis de transport, l'élément de support (50) pour une bande de transport présentant également au moins un axe de rouleau porteur (55) pour le support d'un rouleau porteur (32) ainsi qu'un axe de rouleau d'appui (56) pour supporter un rouleau d'appui (33),
l'axe de rouleau porteur (55) s'étendant dans une direction de sorte que l'axe de rotation du rouleau porteur (32) devant être disposé sur l'axe de rouleau porteur (55) s'étend essentiellement parallèlement à un axe de rotation d'un rouleau de transport (20) devant être supporté dans le site de support (54),
l'axe de rouleau d'appui (56) s'étendant dans une direction de sorte que l'axe de rotation du rouleau d'appui (33) devant être disposé sur l'axe de rouleau d'appui (56) s'étend essentiellement perpendiculairement à un plan de transport, et
l'élément de support (50) pour une bande de transport, y compris le site de support (54) au moins au nombre de un, l'axe de rouleau d'appui (56) au moins au nombre de un et l'axe de rouleau porteur (55) au moins au nombre de un, étant réalisé d'une seule pièce en tant que pièce moulée par injection.

2. Elément de support (50) pour une bande de transport selon la revendication 1, le site de support (54) étant constitué en tant que creux oblong pour permettre un support flottant.

3. Elément de support (50) pour une bande de transport selon l'une des revendications précédentes, le site de support (54) présentant une forme oblongue et étant fermé vers le haut.

4. Kit de post-équipement pour un transporteur à rouleaux (1), comportant une pluralité d'éléments de support (50) pour une bande de transport selon l'une des revendications 1 à 3, des éléments de fixation (40) pour la fixation des éléments de support (50) pour une bande de transport sur un châssis de transport (10), une pluralité de rouleaux de transport (20), ainsi qu'un système d'entraînement (30) comprenant au moins une courroie d'entraînement (314), une pluralité de rouleaux porteurs (32) ainsi que de rouleaux d'appui (33), au moins un rouleau de renvoi (36), et au moins un rouleau d'entraînement (37) qui est raccordé à un moteur d'entraînement (38).

5. Transporteur à rouleaux (1) avec un châssis de transport (10) et une pluralité de rouleaux de transport (20) qui sont supportés en rotation dans le châssis de transport (10) et une pluralité d'éléments de support (50) pour une bande de transport selon l'une des revendications 1 à 3, plusieurs éléments de support (50) pour une bande de transport étant fixés par au moins un élément de fixation (40) sur un profil latéral du châssis de transport (10), le transporteur à rouleaux (1) comprenant en outre un système d'entraînement (30) avec au moins une courroie d'entraînement (31) qui est tendue entre deux rouleaux de renvoi (36) et dont le brin supérieur (311) est appuyé entre les rouleaux de renvoi (36) par le biais d'une pluralité de rouleaux porteurs (32) ainsi que de rouleaux d'appui (33), ainsi qu'une pluralité de rouleaux de transport (20) qui sont supportés de façon flottante sur le brin supérieur (311) de la courroie d'entraînement (31).

6. Transporteur à rouleaux (1) selon la revendication 5, l'élément de fixation (40) au moins au nombre de un, avec lequel plusieurs éléments de support (50) pour une bande de transport sont fixés sur le profil latéral du châssis de transport (10), étant réalisé en tant que pièce en tôle pliée du type console, en particulier en tant que bande de tôle oblongue qui présente, dans la direction transversale de la bande de tôle, une zone de fixation (41) et une zone d'appui (42) disposées l'une à côté de l'autre, la zone d'appui (42) étant repliée à peu près à angle droit par rapport à une zone de serrage.

7. Transporteur à rouleaux (1) selon la revendication 6 ou 7, le transporteur à rouleaux (1) étant constitué en tant que transporteur à rouleaux curviligne, la courroie d'entraînement (31) s'étendant sur le côté éloigné des rouleaux de transport (20) sur la pluralité de rouleaux porteurs (32) et étant supportée côté intérieur de la courbe par la pluralité de rouleaux d'appui (33) de telle sorte que la courroie d'entraînement (31) s'étend le long d'une courbe polygonale qui suit la courbe de transport.

8. Transporteur à rouleaux (1) selon la revendication 7, le rapport entre le nombre de rouleaux de transport F entraînés et le nombre de rouleaux d'appui S correspondant à la relation 0,5 ≤ F/S ≤ 4.

9. Transporteur à rouleaux (1) selon l'une des revendications 5 à 8, les éléments de support (50) pour une bande de transport présentant respectivement un axe de rouleau porteur (55) et un axe de rouleau d'appui (56), l'axe de rouleau porteur (55) ainsi que l'axe de rouleau d'appui (56) d'un élément de support (50) pour une bande de transport étant disposés le long du tracé de la courroie d'entraînement (31) de façon décalée à partir de la position du site de support (54) de l'élément de support (50) pour une bande de transport.

10. Transporteur à rouleaux (1) selon la revendication 9, l'axe de rouleau porteur (55) ainsi que l'axe de rouleau d'appui (56) des éléments de support (50) pour une bande de transport respectifs étant disposés le long du tracé de la courroie d'entraînement de façon décalée d'environ un demi-diamètre de rouleau de transport à partir de la position du site de support (54) de l'élément de support (50) pour une bande de transport.

11. Transporteur à rouleaux (1) selon l'une des revendications 5 à 10, les éléments de support (50) pour une bande de transport présentant respectivement une surface d'appui de console (51) correspondant à l'élément de fixation (40) et une surface d'appui de profil latéral (52) correspondant au profil latéral.

12. Transporteur à rouleaux (1) selon l'une des revendications 5 à 11, les rouleaux d'appui (33) et/ou les rouleaux porteurs (32) étant réalisés en tant que rouleaux avec des surfaces en forme de cylindre circulaire ou en forme de cône circulaire.
